# EUROPEAN PATENT APPLICATION

(11) **EP 4 592 722 A1**
(43) Date of publication of application: **30.07.2025**
(21) Application number: 24218795.3
(22) Date of filing: 10.12.2024
(51) Int. Cl.: G02B 6/44

(54) **REPEATERED SUBMARINE OPTICAL CABLE**

(30) Priority: 26.01.2024 IT 202400001500
(71) Applicant: Prysmian S.p.A., 20126 Milan (IT)
(72) Inventor: DE RAI, Luca Giorgio Maria, 20126 Milano (MI) (IT)
(74) Representative: Praxi Intellectual Property Milano

(57) **Abstract**

The present disclosure relates to a repeatered submarine optical cable (1) comprising:
- one or more optical fibres (2);
- a metallic tubular buffer element (3) housing the one or more optical fibres (2);
- an electrically conductive layer (6) surrounding the tubular buffer element (3), and
- at least one armour (4, 10),
wherein the at least one armour (4, 10) and/or the electrically conductive layer (6) comprise carbon nanotube (CNT) bundles (7).

## Description

### BACKGROUND

### Technical field

The present disclosure relates to the field of telecommunication cables, particularly to a repeatered submarine optical cable, which can be deployed at high depths and for long lengths, e.g. in ocean floors.

### Description of the Related Art

Optical cables for submarine applications should feature a high tensile strength and, at the same time, a light weight. Indeed, during installation and operation, a submarine optical cable should sustain high tensile loads when it hangs off of the installation vessel from the surface of the water to the seabed for many hundreds of meters with a consequent substantial tensile stress. Thus, submarine optical cables comprise one or more metallic armour layers, usually made of wound steel wires which increase the weight of the cable. As a consequence, in general the deeper the deployment site, the heavier the cable. On the other hand, the payoff system of the installation vessel has to be commensurate with the weight of the cable to be deployed. Hence, the heavier the cable is, the stronger the gripping force of the payoff system needs to be.

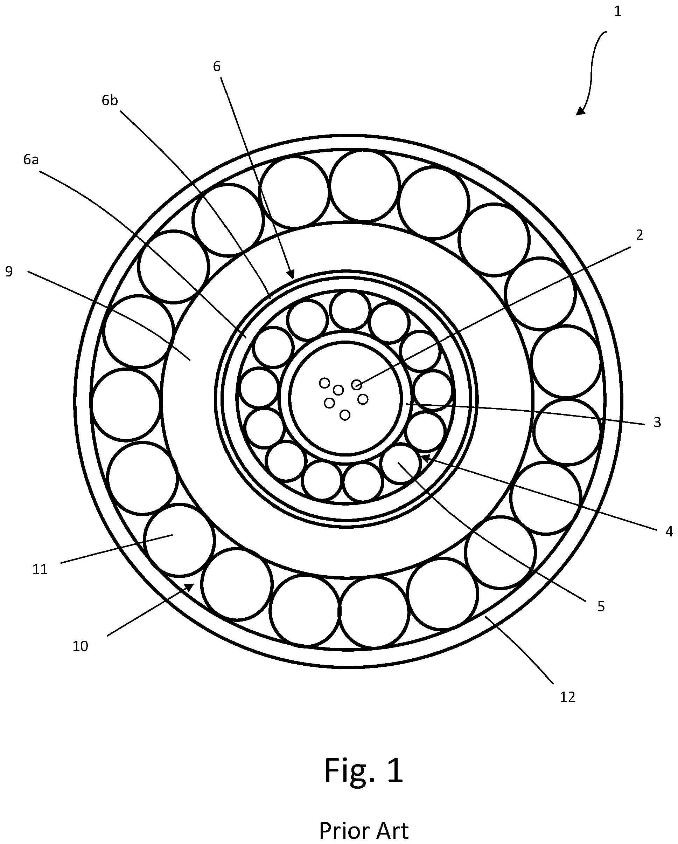

Additionally, submarine optical fibre cables, particularly developed for deep-sea transoceanic systems, suffer of attenuation which may be up to 0.25dB/km or more. Thus, repeaters, generally placed every 50 km to 70 km, need to be used for optical signal amplification. Repeaters are fed by electric power which can be carried by the submarine optical cable. To this purpose, the repeatered submarine optical cable comprises an electric conductor, usually made of copper optionally joined to a semiconductive layer. Fig. 1 shows an example of a known repeatered submarine optical cable. This further increases the cable weight without substantially improving the tensile strength due to the poor mechanical properties of copper.

In order to reduce the overall cable weight while maintaining good mechanical properties at the same time, cables reinforced with aramid fibres have been proposed (see, for example US7285726).

The problem of providing electrically conductive cables with high tensile strength and light weight is common also in non-subsea applications. For example, WO 2015/162263 A1 discloses a hoisting member for an elevator system comprising a strength component comprising carbon nanotubes (CNTs) surrounded or embedded in a matrix material, e.g. epoxy resin or elastomer, creating a solid structure for the hoisting member. In some embodiments, the CNTs are configured to transmit electrical signals through hoisting member to provide power to an elevator car and/or to provide communication between a controller and the elevator car.

### SUMMARY OF THE INVENTION

The Applicant therefore aims at providing a repeatered submarine optical cable, capable of carrying electric power to optical repeaters, which has a high tensile strength and at the same time is sufficiently lightweight.

The Applicant has found that providing a repeatered submarine optical cable with carbon nanotube (CNT) bundles as strength components in substitution or in combination with metallic, e.g. made of steel, armour wires makes the cable lighter while maintaining high tensile strength. CNT bundles can be used also as electrically conductive components in substitution or in combination with a conductor, e.g. a copper layer optionally joined to a semiconductive layer, thereby eliminating or reducing the conductor thickness and weight.

In the present description and claims, a CNT bundle can be made of at least two CNT yarns twisted each other/s, each CNT yarn being made of a plurality of CNT filaments.

Accordingly, the present disclosure relates to a repeatered submarine optical cable comprising:
- one or more optical fibres;
- a metallic tubular buffer element housing the one or more optical fibres;
- an electrically conductive layer surrounding the tubular buffer element; and
- at least one armour,
wherein the at least one armour and/or the electrically conductive layer comprise carbon nanotube (CNT) bundles.

According to the present disclosure the CNT bundles can act as strength members and/or as electric conductors depending on the position in the cable, as it will be shown in the following.

In an embodiment, the CNT bundles are in form of one or more bundles retained in tight configuration in a jacket.

In an embodiment, more bundles are retained adjacent and in direct contact one another in the jacket.

In an embodiment, the armour and the electrically conductive layer are a single layer comprising the CNT bundles.

In an embodiment, the single layer essentially consists of CNT bundles.

In an alternative embodiment, the armour comprises, helically wound around the buffer element, metallic armour wires and the CNT bundles.

In an embodiment, the electrically conductive layer comprises an electrically conductive element surrounding the armour and comprising the CNT bundles.

Optionally, the electrically conductive layer further comprises a swelling layer joined to the electrically conductive element.

In an embodiment, the repeatered submarine optical cable further comprises a protective sheath surrounding the electrically conductive layer and the armour.

In an embodiment, the repeatered submarine optical cable comprises an outer armour surrounding the protective sheath.

In an embodiment, the outer armour comprises one or more layers comprising a plurality of metallic, helically wound, armour wires.

In an alternative embodiment, the outer armour essentially consists of CNT bundles.

### BRIEF DESCRIPTION OF THE DRAWINGS

Further characteristics and advantages will be more apparent from the following description of some embodiments given as a way of an example with reference to the enclosed drawings in which:
Figure 1 is a sectional view of a repeatered submarine optical cable according to the prior art;
Figures 2a and 2b are sectional views of CNT bundles of the repeatered submarine optical cable according to alternative embodiments;
Figure 3 is a sectional view of the repeatered submarine optical cable according to an embodiment of the present disclosure;
Figure 4 is a sectional view of the repeatered submarine optical cable according to another embodiment of the disclosure; and
Figure 5 is a sectional view of the repeatered submarine optical cable according to another further embodiment of the disclosure; and
Figure 6 is a sectional view of the repeatered submarine optical cable according to another further embodiment of the disclosure.

### DETAILED DESCRIPTION

For the purpose of the present description and of the appended claims, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

For the purpose of the present description and of the appended claims, the words "a" or "an" are used to describe elements and components of the invention. This is done merely for convenience and to give a general sense of the invention. In this description and claims should be read to include one or at least one and the singular also includes the plural unless it is obvious that it is meant otherwise.

The present disclosure, in at least one of the aforementioned aspects, can be implemented according to one or more of the following embodiments, optionally combined together.

Figure 1 shows a repeatered submarine optical cable 1 as known in the art. The cable 1 is adapted for submarine applications, e.g. it can be deployed on ocean floors, as discussed in the introductory part of the present description.

The cable 1 can comprise one or more optical fibres 2 bundled within a tubular buffer element 3 made of metal, e.g. of copper or steel, suitable to act as a water barrier. The tubular buffer element 3 can be manufactured by longitudinally welding, e.g. laser welding, a metal foil around the optical fibres 2. For the purposes of the present description, by "optical fibre" it is meant an optical core transmitting light surrounded by one or more protective layers.

The buffer element 3 may also contain, in addition to the optical fibres 2, element/s capable of absorbing hydrogen, such as a gel or a thixotropic filling compound.

The cable 1 comprises an inner armour 4 surrounding and optionally in direct contact with the tubular buffer element 3. The inner armour 4 can be formed by a layer of metallic armour wires 5 helically wound. The armour wires 5 can be made of steel, e.g. of galvanized steel.

The cable 1 further comprises an electrically conductive layer 6 which surrounds and may be in direct contact with the inner armour 4. The electrically conductive layer 6 enables the feeding of electric power to optical repeaters (not shown) through the optical cable 1 itself. The electrically conductive layer 6 comprises an electrically conductive element 6a, e.g. made of copper. Additionally, the electrically conductive layer 6 may comprise a composite conductive element, where the electrically conductive element 6a is optionally joined to a semiconductive layer and/or a swelling layer 6b. The layer 6b can be in form of a woven or non-woven tape made of, for example, polyester fibers charged with carbon black and water absorbent powder.

A protective sheath 9 surrounds the electrically conductive layer 6, for example in direct contact thereto. For example, the protective sheath 9 is formed by extrusion of a polymeric material, for example HDPE (high-density polyethylene). The protective sheath 9 helps preventing the cable 1 from water ingress.

The cable 1 can also comprise an outer armour 10 surrounding the protective sheath 9, for example in direct contact with the same. The outer armour 10 can comprise one or more layers of metallic, e.g. steel, armour wires 11 helically wound.

The cable 1 can further comprise an outermost protective layer 12 around the outer armour 10, for example in direct contact with the same. The outermost protective layer 12 can comprise a sheath which may be formed by extrusion of a polymeric material, for example HDPE (high-density polyethylene). Alternatively, the outermost protective layer 12 comprises or essentially consists of polypropylene (PP) yarns. PP yarns may improve the handling performance.

The repeatered submarine optical cable of the present disclosure comprises carbon nanotube (CNT) bundles acting as strength members and/or as electric conductors (in combination with or in substitution of the electrically conductive element 6a), as will be described in more detail below.

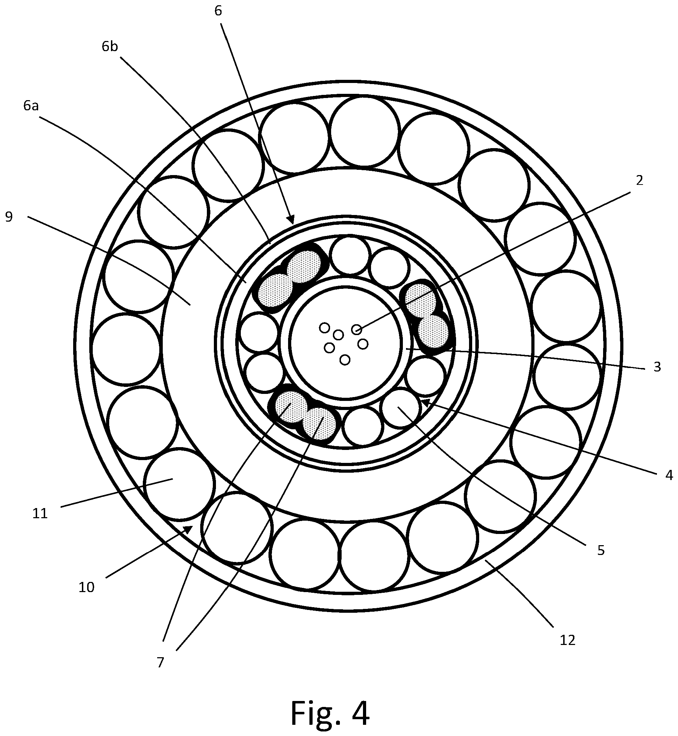

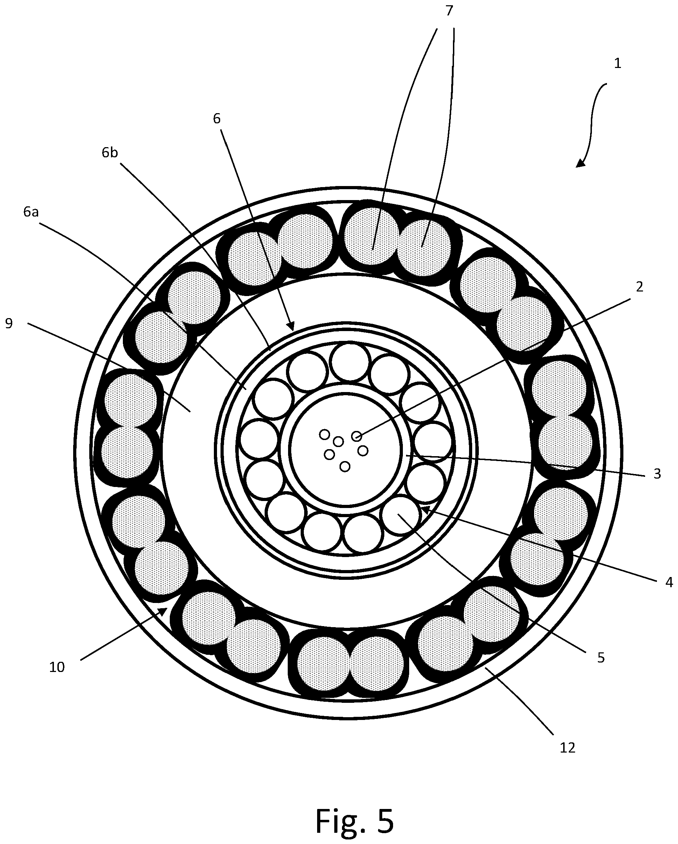

When the CNT bundles are intended to act as strength members, they can be present in the cable in combination with or in substitution of the metallic wires 5 and/or 11 of the inner armour 4 and/or of the outer armour 10. Two of these embodiments are shown in Figure 4, where the inner armour 4 comprises armour wires 5 and CNT bundles 7, and in Figure 5, where all the armour wires 11 of the outer armour 10 are substituted by CNT bundles 7.

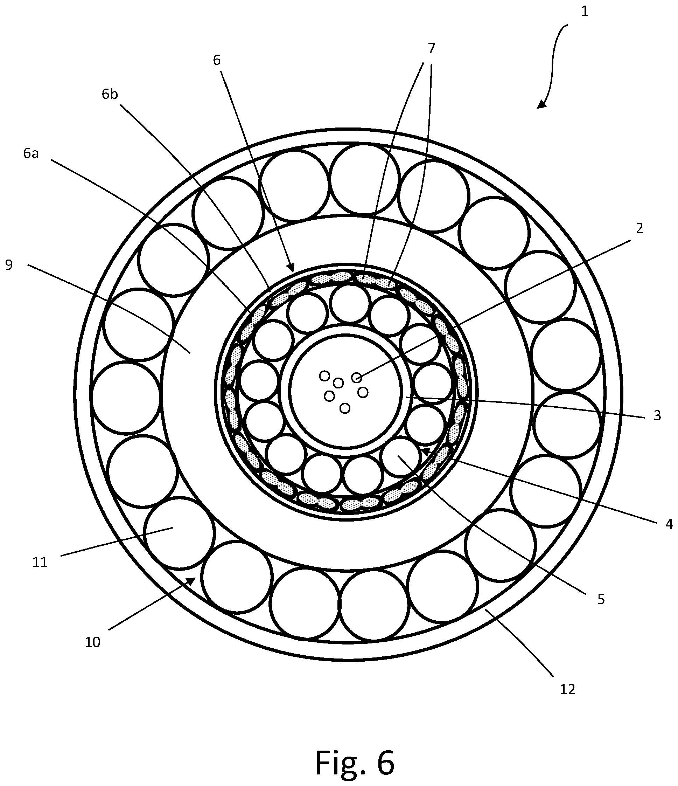

When the CNT bundles are intended to act as electric conductors, they can be present in combination with or in substitution of the electrically conductive element 6a. One of these embodiments is shown in Figure 6, where the conductive element 6a is substituted by CNT bundles 7. In this case, the optional layer 6b can be omitted especially when it is solely semiconductive.

The CNT bundles can have a diameter comprised between 0.2 and 1 mm and be formed from CNT yarns having a diameter comprised between 10 and 100 µm (wherein each CNT yarn is formed of filaments having a diameter comprised between 2 to 20 nm).

The CNT bundles have a specific electric conductivity lower than that of copper (about 5,600 S·m/mm² vs 6,300 S·m/mm² for copper), while the CNT bundle tensile strength is greater than that of steel (5-70 GPa vs 0.4-1.55 GPa for steel). The mechanical performance of CNT bundles versus steel is even more outstanding considering the strength-to-weight ratio (specific strength) which is of greater than 40,000 versus a value of about 150 kN·m/kg for a high carbon steel.

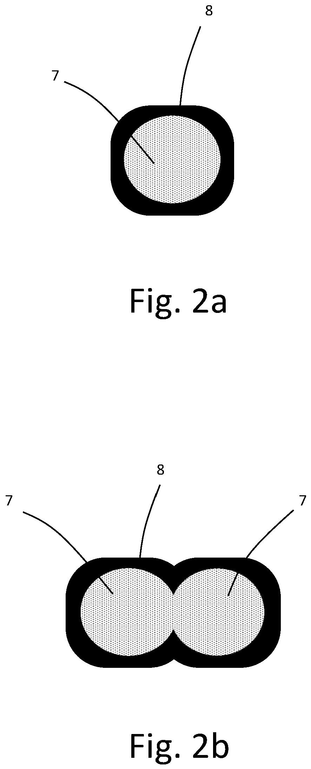

In an embodiment, as shown in Figures 2a and 2b, the CNT bundles are in form of one or more bundles 7 retained, in tight configuration, in a jacket 8. For example, a single jacket 8 may be configured for retaining a single CNT bundle 7 (FIG. 2a) or two CNT bundles 7 (FIG. 2b), for example retained adjacent and in direct contact one another. The jacket 8 is, for example, an extruded tube made, for example, of polyurethane or rubber-(EPR, NBR) based material, or of polyethylene or polypropylene.

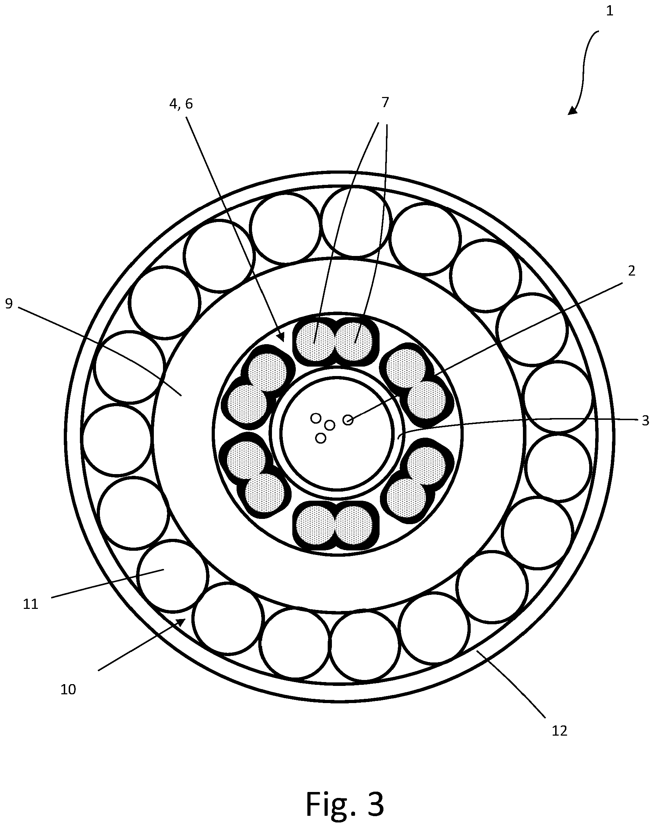

In the embodiment of Figure 3, the inner armour 4 and the electrically conductive layer 6 are in form of a single layer 4,6 where CNT bundles provide both mechanical (tensile) strength and electric conductivity. The CNT bundles may be in form of yarn bundles 7 in jacket 8 as described in Figure 2a or 2b. The CNT bundles are helically wound around the buffer tube 3, optionally in direct contact thereto. In this case the overall weight of the cable is reduced with respect to the cable of Figure 1, as a single layer, lighter than a layer made of steel (the weight of the electrically conductive layer is negligible in front of that of an armour layer), can provide the cable with the sought electrical and mechanical performance.

In the embodiment of Figure 4 the inner armour 4 comprises both a plurality of helically wound metallic armour wires 5 and CNT bundles, for example in form of yarn bundles 7 in jacket 8 as described in Figure 2a or 2b, while the electrically conductive layer 6 is as described in connection to Figure 1. In this case the overall weight of the cable is reduced with respect to the cable of Figure 1.

In the embodiment of Figure 5 the outer armour 10 is based on CNT bundles as strength members (in the place of the steel wires 11 of the known cable of Figure 1). The CNT bundles may be in form of yarn bundles 7 in jacket 8 as described in Figure 2a or 2b. The CNT bundles are helically wound around the protective sheath 9, optionally in direct contact thereto. In this case the weight of the cable is substantially reduced with respect to the cable of Figure 1 for the reasons already mentioned above.

In the embodiment of Figure 6 the electrically conductive layer 6 comprises CNT bundles in the place of the electrically conductive element 6a and, optionally the semiconductive layer 6b. The CNT bundles may be in form of yarn bundles 7 in jacket 8 as described in Figure 2a or 2b. The CNT bundles are helically wound around the inner armour 4, optionally in direct contact thereto. In this case the CNT bundles act as the only electrical conductors. Accordingly, the quantity of metallic armour wires 5 and/or 11 or the number of layers in armour 4 and/or 10 can be reduced as an electrical conductor made of CNT is far less prone to tensile stress than one made of copper.

Additionally, the cables 1 of Figs. 3-6 according to the present disclosure may comprise an outermost protective layer 12 essentially consisting of polypropylene (PP) yarns.

From the above follows that the CNT bundles can fully or partially act as tensile elements, as electrical conductors or as both tensile strength elements and electrical conductors. Depending on the desired cable properties in terms of weight, tensile strength, and electrical conductivity, the number of steel wires and/or the copper electrically conductive element 6a can be partially reduced or fully eliminated and substituted with a proper amount of CNT bundles having equivalent mechanic and/or electric properties.

In the following, a comparative known cable (having a structure like that of Fig. 1, but with an outer armour 10 comprising two layers of steel wires 11) and the cable of Fig. 3 according to the present disclosure, where the inner armour and the electric conductor are made of CNT bundles, are compared in term of dimension and weight.

Taking into account that the buffer tubes 3 of the two cables have the same diameter (4.4 mm), the electric conductor 6 of the comparative cable has a diameter of 9.0 mm, while in the cable of Fig. 3 the layer 4,6 of CNT bundles acting as the inner armour layer and the electrically conductive layer has a diameter of 13 mm. The weight of the inner armour 4 + the electrically conductive layer 6a of the comparative cable is 328 kg/km, while the weight of the layer 4,6 of CNT bundles is of 240 kg/km.

The protective sheath 9 of the comparative cable has an outer diameter of 17 mm and weighs 52 kg/km, while the protective sheath 9 of the cable of Fig. 3 has an outer diameter of 21 mm and weighs 199 kg/km due to the greater diameter of the underlying CNT layer 4,6.

The diameter of the outer armour 10 of the comparative cable (comprising two layers of steel wires 11) is of 27.4 mm. Thanks to the greater tensile strength of the CNT bundles present as inner armour 4 (and electric conductor 6) with respect to the steel wires, in the cable of Fig. 3 the outer armour 10 made of a single layer of steel wires 11 is suitable to bear the cable weight, such single layered outer armour 10 having a diameter of 26.2 mm. The weight of the double layered outer armour 10 of the comparative cable is 2,145 kg/km, while the weight of the single layered outer armour 10 of the present cable is 1,200 kg/km.

The outermost protective layer 12 of the comparative cable has an outer diameter of 34.2 mm and weighs 230 kg/km, while the outermost protective layer 12 of the cable of Fig. 3 has an outer diameter of 33 mm and weighs 221 kg/km thanks to the smaller diameter of the underlying outer armour 10.

Adding to the weights above mentioned for the two cables the weight of the buffer tube 3 (45 kg/km), the total weight of the comparative cable is 2,908 kg/km, while the total weight of the cable of Fig.3 is 1,906 kg/km.

Compared to a known cable, a cable according to the present disclosure has smaller diameter and has almost half the weight.

It is further observed that steel and copper manufacturing is responsible of a big amount of global CO₂ emissions, whereas CNTs can be made from hydrocarbons, capturing carbon and co-producing hydrogen. Accordingly, the repeatered submarine optical cable of the present disclosure is more sustainable than repeatered submarine optical cables according to the known art because the amount of steel and copper can be reduced.

## Claims

1. A repeatered submarine optical cable (1) comprising:
- one or more optical fibres (2);
- a metallic tubular buffer element (3) housing the one or more optical fibres (2);
- an electrically conductive layer (6) surrounding the tubular buffer element (3), and
- at least one armour (4, 10),
wherein the at least one armour (4, 10) and/or the electrically conductive layer (6) comprise carbon nanotube (CNT) bundles (7).

2. The repeatered submarine optical cable (1) of claim 1, wherein the CNT bundles are in form of one or more bundles (7) retained in tight configuration in a jacket (8).

3. The repeatered submarine optical cable (1) of claim 2, wherein more bundles (7) are retained adjacent and in direct contact one another in the jacket (8).

4. The repeatered submarine optical cable (1) of claim 1, wherein the armour (4) and the electrically conductive layer (6) are a single layer (4,6) comprising the CNT bundles (7).

5. The repeatered submarine optical cable (1) of claim 4, wherein the single layer (4,6) essentially consists of CNT bundles (7).

6. The repeatered submarine optical cable (1) of claim 4, wherein the armour (4) comprises, helically wound around the buffer element (3), metallic armour wires (5) and the CNT bundles (7).

7. The repeatered submarine optical cable (1) of claim 1, wherein the electrically conductive layer (6) comprises an electrically conductive element (6a) surrounding the armour (4) and comprising the CNT bundles.

8. The repeatered submarine optical cable (1) of claim 7, wherein the electrically conductive layer (6) further comprises a swelling layer (6b) joined to the electrically conductive element (6a).

9. The repeatered submarine optical cable (1) of claim 1, further comprising a protective sheath (9) surrounding the electrically conductive layer (6) and the armour (4).

10. The repeatered submarine optical cable (1) of claim 9, comprising an outer armour (10) surrounding the protective sheath (9).

11. The repeatered submarine optical cable (1) of claim 10, wherein the outer armour (10) comprises one or more layers comprising a plurality of metallic, helically wound, armour wires (11).

12. The repeatered submarine optical cable (1) of claim 10, wherein the outer armour (10) essentially consists of CNT bundles (7).
